# EUROPEAN PATENT SPECIFICATION

(11) **EP 3 768 896 B1**
(45) Date of publication and mention of the grant of the patent: **12.01.2022**
(21) Application number: 18783380.1
(22) Date of filing: 25.09.2018
(51) Int. Cl.: E01H 1/04, A01G 20/40

(54) **HEIGHT ADJUSTMENT OF MOBILE GARDEN TOOLS**
HÖHENVERSTELLUNG VON MOBILEN GARTENGERÄTEN
RÉGLAGE EN HAUTEUR D'OUTILS DE JARDIN MOBILES

(30) Priority: 20.03.2018 DE 102018002285
(43) Date of publication of application: 27.01.2021
(73) Proprietor: HUSQVARNA AB, 561 82 Huskvarna (SE)
(72) Inventor: SCHNEIDER, Thomas, 73571 Göggingen-Horn (DE); MAAG, Markus, 89081 Ulm (DE)
(74) Representative: Finkele, Rolf
(86) International application number: PCT/EP2018/075891
(87) International publication number: WO 2019/179640

(56) References cited:
- CN-A- 102 763 564
- CN-U- 202 697 310
- CN-Y- 201 190 271
- US-A1- 2006 070 194

## Description

### TECHNICAL FIELD

The present disclosure relates to a material collecting equipment. More particularly, the present disclosure pertains to improved safety and ease of height adjustment of the material collecting equipment such as a mobile garden tool.

### BACKGROUND

Hand-held material collecting equipment including, but not limited to, mobile garden tools such as leaf collecting devices (say lawn sweepers or leaf sweepers) and lawn movers have been well known in the art. This hand-held material collecting equipment typically includes an implement portion, and a handle connected to the implement portion. During working, the implement portion transfers leaf or any other object from a ground surface to be collected towards a collection basket or hopper. In some instances, there can be a requirement to vary the height of the implement portion or the material collecting equipment to suit various surface or application requirements.

However, it has also been noticed that although some height adjustment mechanisms have been provided in conventional designs of many material collecting equipment, these height adjustment mechanisms are susceptible to inadvertent adjustment even while the material collecting equipment is in operation. From safety and security considerations, such inadvertent adjustment of the height may hinder smooth movement of a lawn mower, or a leaf collecting device. As a result, these height adjustment means may negatively impact on efficiency as well as safety of operation being carried out by a user.

One such height adjustment mechanism is disclosed by CN 202,697,310 (hereinafter referred to as '310 reference). The '310 reference provides a machine for sweeping grass clippings. The machine includes a guide plate which has its body perpendicular to an adjusting lever with arc-shaped adjustment slot. The adjustment slot includes a curved groove fastener, where the fastener is movably connected with the adjusting lever. However, the '310 reference comes short of providing adequate safety and security by locking of height adjustment such as during working of the machine.

Hence, there is a need for an improved material collecting equipment that allows better safety and ease of height adjustment for the material collecting equipment.

### SUMMARY

In view of the above, it is an objective of the present invention to solve or at least reduce the drawbacks discussed above. The objective is at least partially achieved by a material collection equipment. The material collection equipment includes a handle. The material collection equipment includes a storage compartment coupled to the handle to store material. Further, the material collection equipment includes an implement compartment disposed adjacent to the storage compartment. The implement compartment includes a first side wall, and a second side wall disposed opposite with respect to the first side wall. The implement compartment includes an axle rotatably coupled to each of the first side wall and the second side wall. The implement compartment includes an implement coupled to the axle. The implement collects the material from a ground surface and transfer the material into the storage compartment. The material collection equipment includes a pair of wheels coupled to the axle. Each of the pair of wheels to movably support the implement compartment on the ground surface.

The material collection equipment further includes a height adjustment mechanism to adjust a working height of the material collection equipment relative to the ground surface. The height adjustment mechanism includes a sliding path defined on an outer surface of the implement compartment. The height adjustment mechanism includes a bar coupled to the first side wall and the second side wall. Further, the height adjustment mechanism includes an adjustment knob coupled to the bar. The adjustment knob slides within the sliding path in a first direction and a second direction to change the working height of the material collection equipment. The material collection equipment is characterized in that the sliding path includes a rack gear, and the adjustment knob has a pinion gear in rotational engagement with the rack gear. Further, the material collection equipment includes a locking arrangement to lock sliding motion of the adjustment knob within the sliding path. Thus, the present disclosure provides simple, convenient, and safe height adjustment which is dependent upon activity level (i.e. working or parked state) of the material collection equipment.

According to an embodiment of the present invention, the locking arrangement includes a clutch operatively coupled to the adjustment knob, and a blocking unit operatively coupled to the sliding path. The clutch locks with the blocking unit on rotation of the adjustment knob in a first direction. This allows fixing a safe working height during working state of the material adjusting equipment.

According to an embodiment of the present invention, the clutch unlocks from the blocking unit on rotation of the adjustment knob in a second direction. This allows adjustment only for parked or non-working state of the material adjusting equipment.

According to an embodiment of the present invention, the material collection equipment is a lawn mower. Application of the present disclosure for equipment such as the lawn mower may make them more suitable for different geographical or user dynamics.

According to an embodiment of the present invention, the material collection equipment is a leaf collecting device. Such device usually requires height adjustment for undertaking operation to suit different surfaces or grass levels.

According to an embodiment of the present invention, the sliding path has marking indicators corresponding to different levels of the working height of the material collection equipment. Such marking indicators may serve as a working reference for the common user for a safe and trouble-free operation of the material collection equipment.

According to an embodiment of the present invention, the clutch is a two-way overrunning clutch. Choice of the clutch can be dependent upon application considerations such as equipment life, duty-cycle, safety factor etc.

According to an embodiment of the present invention, the adjustment knob includes a fin to prevent spinning of the clutch. This provides adequate engagement while ensuring safety, and convenience of operation of the adjustment knob.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a material collection equipment, in accordance with an embodiment of the present invention;
**FIG. 2** shows a perspective view of a height adjustment mechanism of the material collection equipment, in accordance with an embodiment of the present invention;
**FIG. 3A** shows a side cross-sectional view of the height adjustment mechanism of the material collection equipment, in accordance with an embodiment of the present invention; and
**FIG. 3B** shows a front view of a locking arrangement of the height adjustment mechanism of the material collection equipment, in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

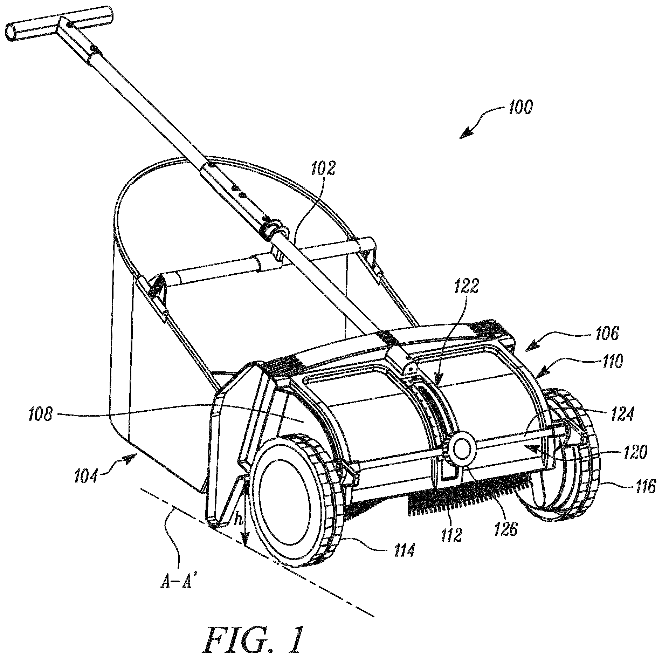

**FIG. 1** shows a perspective view of a material collection equipment **100** in a working state, according to an embodiment of the present invention. In an embodiment as shown in **FIG. 1****,** the material collection equipment **100** is illustrated as a leaf collecting device. However, in other embodiments of the present invention, the material collection equipment **100** may be a lawn mower, or other types of gardening equipment known to persons skilled in the art.

With continued reference to **FIG. 1****,** the material collection equipment **100** includes a handle **102.** The material collection equipment **100** includes a storage compartment **104** coupled to the handle **102** to store material such as leaves, grass or foliage. Further, the material collection equipment **100** includes an implement compartment **106** disposed adjacent to the storage compartment **104.** The implement compartment **106** includes a first side wall **108,** and a second side wall **110** disposed opposite to the first side wall **108.** The implement compartment **106** includes an axle (not shown) rotatably coupled to each of the first side wall **108** and the second side wall **110.** The implement compartment **106** further includes an implement **112** coupled to the axle. The implement **112** is adapted to collect the material from a ground surface **A-A'** and transfer the material into the storage compartment **104.** The material collection equipment **100** includes a pair of wheels **114, 116** coupled to the axle. During working, each of the pair of wheels **114, 116** find application to provide support to the implement compartment **106** on the ground surface **A-A'.**

As used herein, working height **h** of the material collection equipment **100** shall refer to distance from the ground surface **A-A'** to base of the implement compartment **106,** although any other component may also be referenced to gauge the working height **h** of the material collection equipment **100.** This is possible since the present disclosure generally aims to measure and work with relative change in the working height **h** as will be appreciated by a person having knowledge in the art. Put simply, the present disclosure allows raising or lowering of the implement compartment **106** and, as a result, the material collection equipment **100** with enhanced safety and reliability.

From working perspective, the material collection equipment **100** includes a height adjustment mechanism **120** to adjust the working height **h** of the material collection equipment **100** relative to the ground surface **A-A'.** The height adjustment mechanism **120** includes a sliding path **122** (generally with a curved profile) on an outer surface of the implement compartment **106.** The height adjustment mechanism **120** includes a bar **124** coupled to the first side wall **108** and the second side wall **110.** Further, the height adjustment mechanism **120** includes an adjustment knob **126** coupled to the bar **124.** The adjustment knob **126** slides within the sliding path **122** in a first direction and a second direction to change the working height **h** of the material collection equipment **100.**

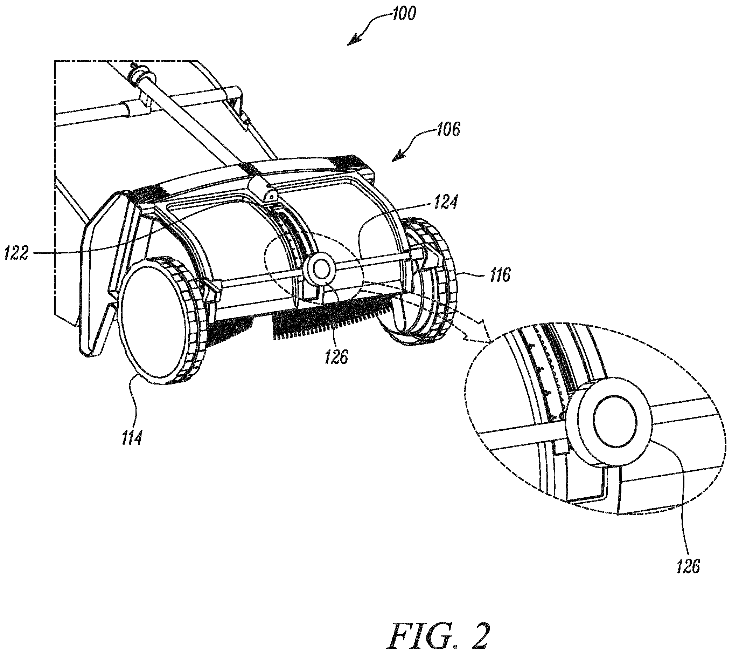

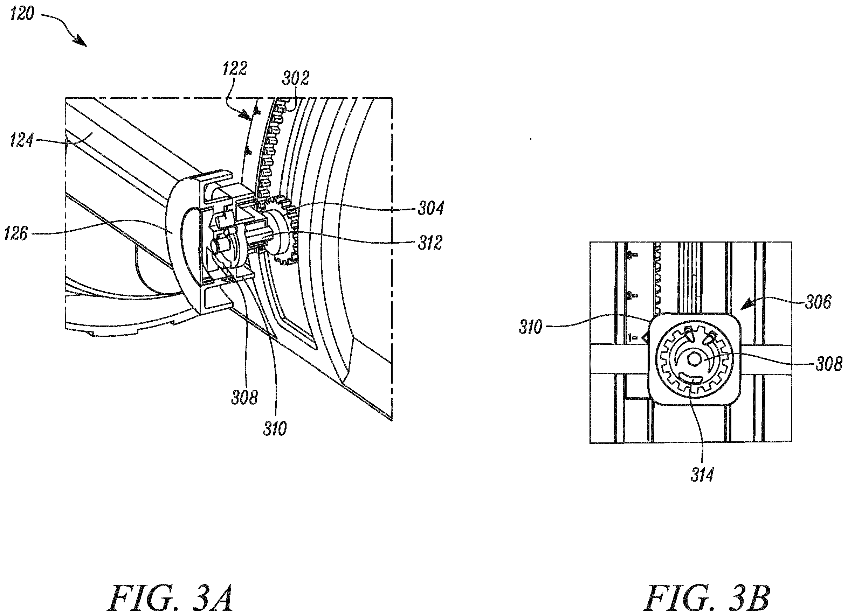

Further, as illustrated in FIGS. **2** and **3A****,** the sliding path **122** has marking indicators corresponding to different levels of the working height **h** of the material collection equipment **100.** Such marking indicators may serve as a working reference for the common user for a safety and trouble-free operation of the material collection equipment **100.** Notably, the sliding path **122** includes a rack gear **302,** and the adjustment knob **126** has a pinion gear **304** in rotational engagement with the rack gear **302.**

**FIG. 3B** shows a front view of a locking arrangement **306** of the height adjustment mechanism **120** of the material collection equipment **100.** Role of the locking arrangement **306** is to lock sliding motion of the adjustment knob **126** within the sliding path **122.** The locking arrangement **306** includes a clutch **308** operatively coupled (by a shaft **312)** to the adjustment knob **126.** Further, a blocking unit **310** is operatively coupled to the sliding path **122.** The clutch **308** locks with the blocking unit **310** on rotation of the adjustment knob **126** in a first direction (say anti-clockwise). Further, the clutch **308** unlocks from the blocking unit **310** on rotation of the adjustment knob **126** in a second direction (say clockwise). Thus, the present disclosure allows height adjustment only for parked or non-working state of the material collection equipment **100** from safety and implementation considerations.

In an embodiment, rotation of the adjustment knob **126** may lead to deflection of the clutch **308.** Then, a stopper **314** of the clutch **308** allows power transfer from the stopper **314** to the shaft **312** which is connected to the pinion gear **304.** Further, a fin can be provided on the adjustment knob **126** to prevent the clutch **308** from spinning.

During working of the material collection equipment **100,** the clutch **308** of the height adjustment mechanism **120** (with the adjustment knob **126** in the second direction) will remain in disengaged position to avoid any inadvertent adjustment of the working height **h.** However, for the parked state, as illustrated in **FIG. 1****,** the material collection equipment **100** can allow adjustment of the working height h by use of the height adjustment mechanism **120.** To perform the height adjustment, the adjustment knob **126** will be rotated in the first direction to engage the clutch **308** with the blocking unit **310.** Technically, this leads to ability to control the gear **304** by rotation of the adjustment knob **126** and, as a result, adjustment of the working height **h** by suitable movement of the adjustment knob **126** in the first direction (say up) or the second direction (say down) on the sliding path **122.**

In some embodiment, the clutch **308** can be a two-way overrunning clutch **308** or any other clutch **308** in accordance with application of the present disclosure for a person having ordinary knowledge in the art. Choice of the clutch **308** can be dependent upon application consideration such as equipment life, duty-cycle, safety factor etc. and shall in no way limit the scope of the present disclosure.

In some embodiments, the material collection equipment **100** can be a lawn mower or a leaf collecting device. The height adjustment mechanism **120** of the present disclosure may find wide application with devices which usually require safe and convenient adjustment of the working height **h** for undertaking operation to suit different surfaces or grass levels.

In the drawings and specification, there have been disclosed preferred embodiments and examples of the invention and, although specific terms are employed, they are used in a generic and descriptive sense only.

### LIST OF ELEMENTS

- **100**: Material Collection Equipment
- **102**: Handle
- **104**: Storage Compartment
- **106**: Implement Compartment
- **108**: First Side Wall
- **110**: Second Side Wall
- **112**: Implement
- **114,116**: Wheels
- **120**: Height Adjustment Mechanism
- **122**: Sliding Path
- **124**: Bar
- **126**: Adjustment Knob
- **128**: Stem
- **302**: Rack Gear
- **304**: Pinion Gear
- **306**: Locking Arrangement
- **308**: Clutch
- **310**: Blocking Unit
- **312**: Shaft
- **314**: Stopper
- **A-A'**: Ground Surface
- **h**: Working Height

## Claims

1. A material collection equipment (**100**) comprising:
a handle (**102**);
a storage compartment (**104**) coupled to the handle (**102**) and adapted to store material therein; and
an implement compartment (**106**) disposed adjacent to the storage compartment (**104**)**,** the implement compartment (**106**) including:
a first side wall (**108**)**;**
a second side wall (**110**) disposed opposite with respect to the first side wall (**108**);
an axle rotatably coupled to each of the first side wall (**108**) and the second side wall (**110**);
an implement (**112**) coupled to the axle, the implement (**112**) adapted to collect the material from a ground surface (**A-A'**) and transfer the material into the storage compartment (**104**); and
a pair of wheels (**114**), (**116**) coupled to the axle, each of the pair of wheels (**114**), (**116**) adapted to movably support the implement compartment (**106**) on the ground surface (**A-A'**);
a height adjustment mechanism (**120**) adapted to adjust a working height (**h**) of the material collection equipment (**100**) relative to the ground surface (**A-A'**);
the height adjustment mechanism (**120**) includes:
a sliding path (**122**) defined on an outer surface of the implement compartment (**106**);
a bar (**124**) coupled to the first side wall (**108**) and the second side wall (**110**); and
an adjustment knob (**126**) coupled to the bar (**124**), wherein the adjustment knob (**126**) is adapted to slide within the sliding path (**122**) in a first direction and a second direction to change the working height of the material collection equipment (**100**);
**characterized in that:**
the sliding path (**122**) includes a rack gear (**302**); and
the adjustment knob (**126**) has a pinion gear (**304**) in rotational engagement with the rack gear (**302**); and
a locking arrangement (**306**) to lock sliding motion of the adjustment knob (**126**) within the sliding path (**122**).

2. The material collection equipment (**100**) of claim **1,** wherein the locking arrangement (**306**) includes:
a clutch (**308**) operatively coupled to the adjustment knob (**126**); and
a blocking unit (**310**) operatively coupled to the sliding path (**122**), wherein the clutch (**308**) locks with the blocking unit (**310**) on rotation of the adjustment knob (**126**) in a first direction.

3. The material collection equipment (**100**) of claim **2**, wherein the clutch (**308**) unlocks from the blocking unit (**310**) on rotation of the adjustment knob (**126**) in a second direction.

4. The material collection equipment (**100**) of any of the preceding claims, wherein the material collection equipment (**100**) is a lawn mower.

5. The material collection equipment (**100**) of any of the preceding claims, wherein the material collection equipment (**100**) is a leaf collecting device.

6. The material collection equipment (**100**) of claim **1**, wherein the sliding path (**122**) has marking indicators corresponding to different levels of the working height (**h**) of the material collection equipment (**100**).

7. The material collection equipment (**100**) of claim 2, wherein the clutch (**308**) is a two-way overrunning clutch (**308**).

8. The material collection equipment (**100**) of claim **2**, wherein the adjustment knob (**126**) includes a fin to prevent spinning of the clutch (**308**).

## Patentansprüche

1. Materialsammelgerät **(100),** umfassend: einen Griff **(102);**
ein Aufbewahrungsfach **(104),** das mit dem Griff **(102)** verbunden und angepasst ist, um Material darin aufzubewahren; und
ein Arbeitsgerätfach **(106),** das neben dem Aufbewahrungsfach **(104)** angeordnet ist, wobei das Arbeitsgerätfach **(106)** umfasst:
eine erste Seitenwand **(108);**
eine zweite Seitenwand **(110),** die in Bezug auf die erste Seitenwand **(108)** gegenüberliegend angeordnet ist;
eine Achse, die drehbar mit jeder der ersten Seitenwand **(108)** und der zweiten Seitenwand **(110)** verbunden ist;
ein mit der Achse gekoppeltes Gerät **(112),** wobei das Gerät **(112)** geeignet ist, das Material von einer Bodenoberfläche **(A-A')** zu sammeln und das Material in das Aufbewahrungsfach **(104)** zu überführen; und
ein Paar von Rädern **(114), (116),** die mit der Achse gekoppelt sind, wobei jedes des Paars von Rädern **(114), (116),** geeignet ist, das Arbeitsgerätfach **(106)** beweglich auf der Bodenoberfläche **(A-A')** zu tragen;
einen Höheneinstellmechanismus **(120),** der angepasst ist, um eine Arbeitshöhe **(h)** des Materialsammelgerätes **(100)** relativ zu der Bodenoberfläche **(A-A')** einzustellen;
wobei der Höheneinstellmechanismus **(120)** umfasst:
einen Gleitpfad **(122),** der auf einer Außenfläche des Arbeitsgerätfachs **(106)** definiert ist;
eine Stange **(124),** die mit der ersten Seitenwand **(108)** und der zweiten Seitenwand **(110)** gekoppelt ist; und
einen Einstellknopf **(126),** der mit der Stange **(124)** gekoppelt ist, wobei der Einstellknopf **(126)** angepasst ist, um innerhalb des Gleitpfads **(122)** in eine erste Richtung und eine zweite Richtung zu gleiten, um die Arbeitshöhe des Materialsammelgerätes **(100)** zu ändern,
**dadurch gekennzeichnet, dass:**
der Gleitpfad **(122)** eine Zahnstange **(302)** enthält; und
der Einstellknopf **(126)** ein Ritzel **(304)** in Dreheingriff mit der Zahnstange **(302)** aufweist; und
eine Verriegelungsanordnung (**306**) zum Verriegeln der Gleitbewegung des Einstellknopfes **(126)** innerhalb des Gleitpfads **(122).**

2. Materialsammelgerät **(100)** nach Anspruch 1, wobei die Verriegelungsanordnung **(306)** umfasst:
eine Kupplung **(308),** die operativ mit dem Einstellknopf **(126)** gekoppelt ist; und
eine Blockiereinheit **(310),** die operativ mit dem Gleitpfad **(122)** gekoppelt ist, wobei die Kupplung **(308)** mit der Blockiereinheit **(310)** bei Drehung des Einstellknopfes **(126)** in eine erste Richtung verriegelt.

3. Materialsammelgerät **(100)** nach Anspruch 2, wobei sich die Kupplung **(308)** von der Blockiereinheit **(310)** bei Drehung des Einstellknopfes **(126)** in eine zweite Richtung entriegelt.

4. Materialsammelgerät **(100)** nach einem der vorhergehenden Ansprüche, wobei das Materialsammelgerät **(100)** ein Rasenmäher ist.

5. Materialsammelgerät **(100)** nach einem der vorhergehenden Ansprüche, wobei das Materialsammelgerät **(100)** eine Blattsammelvorrichtung ist.

6. Materialsammelgerät **(100)** nach Anspruch 1, wobei der Gleitpfad **(122)** Markierungsindikatoren aufweist, die unterschiedlichen Niveaus der Arbeitshöhe **(h)** des Materialsammelgerätes **(100)** entsprechen.

7. Materialsammelgerät **(100)** nach Anspruch 2, wobei die Kupplung **(308)** eine Zweiwege-Freilaufkupplung **(308)** ist.

8. Materialsammelgerät **(100)** nach Anspruch 2, wobei der Einstellknopf **(126)** eine Rippe umfasst, um ein Durchdrehen der Kupplung **(308)** zu verhindern.

## Revendications

1. Équipement de collecte de matière **(100)** comprenant :
une poignée **(102)** ;
un compartiment de stockage **(104)** couplé à la poignée **(102)** et conçu pour stocker de la matière en son sein ; et
un compartiment d'outil **(106)** disposé de manière adjacente au compartiment de stockage **(104),** le compartiment d'outil **(106)** incluant :
une première paroi latérale **(108)** ;
une seconde paroi latérale **(110)** disposée à l'opposé par rapport à la première paroi latérale **(108)** ;
un essieu couplé de manière rotative à chacune de la première paroi latérale **(108)** et de la seconde paroi latérale **(110)** ;
un outil **(112)** couplé à l'essieu, l'outil **(112)** étant conçu pour collecter la matière à partir d'une surface du sol **(A-A')** et transférer la matière dans le compartiment de stockage **(104)** ; et
une paire de roues **(114), (116)** couplées à l'essieu, chacune de la paire de roues **(114), (116)** étant conçue pour porter de manière mobile le compartiment d'outil **(106)** sur la surface du sol **(A-A')** ;
un mécanisme de réglage de hauteur **(120)** conçu pour régler une hauteur de travail **(h)** de l'équipement de collecte de matière **(100)** par rapport à la surface du sol **(A-A')** ;
le mécanisme de réglage de hauteur **(120)** inclut :
un chemin de coulissement **(122)** défini sur une surface externe du compartiment d'outil **(106)** ;
une barre **(124)** couplée à la première paroi latérale **(108)** et à la seconde paroi latérale **(110)** ; et
un bouton de réglage **(126)** couplé à la barre **(124),** dans lequel le bouton de réglage **(126)** est conçu pour coulisser à l'intérieur du chemin de coulissement **(122)** dans une première direction et une seconde direction pour changer la hauteur de travail de l'équipement de collecte de matière **(100)** ;
**caractérisé en ce que** :
le chemin de glissement **(122)** inclut une crémaillère **(302)** ; et
le bouton de réglage **(126)** possède un pignon **(304)** en prise rotative avec la crémaillère **(302)** ; et
un agencement de verrouillage **(306)** pour verrouiller un mouvement de coulissement du bouton de réglage **(126)** à l'intérieur du chemin de coulissement **(122).**

2. Équipement de collecte de matière **(100)** selon la revendication **1,** dans lequel l'agencement de verrouillage **(306)** inclut :
un embrayage **(308)** couplé de manière fonctionnelle au bouton de réglage **(126)** ; et
une unité de blocage **(310)** couplée de manière fonctionnelle au chemin de coulissement **(122),** dans lequel l'embrayage **(308)** se verrouille avec l'unité de blocage **(310)** lors de la rotation du bouton de réglage **(126)** dans une première direction.

3. Équipement de collecte de matière (100) selon la revendication 2, dans lequel l'embrayage **(308)** se déverrouille de l'unité de blocage **(310)** lors de la rotation du bouton de réglage **(126)** dans une seconde direction.

4. Équipement de collecte de matière **(100)** selon l'une quelconque des revendications précédentes, dans lequel l'équipement de collecte de matière **(100)** est une tondeuse à gazon.

5. Équipement de collecte de matière **(100)** selon l'une quelconque des revendications précédentes, dans lequel l'équipement de collecte de matière **(100)** est un dispositif de ramassage de feuilles.

6. Équipement de collecte de matière **(100)** selon la revendication **1,** dans lequel le chemin de glissement **(122)** possède des repères de marquage correspondant à différents niveaux de la hauteur de travail **(h)** de l'équipement de collecte de matière **(100).**

7. Équipement de collecte de matière **(100)** selon la revendication **2,** dans lequel l'embrayage **(308)** est un embrayage à roue libre bidirectionnel **(308).**

8. Équipement de collecte de matière **(100)** selon la revendication **2,** dans lequel le bouton de réglage **(126)** inclut une ailette pour empêcher le tournoiement de l'embrayage **(308).**
